# EUROPEAN PATENT SPECIFICATION

(11) **EP 3 037 465 B1**
(45) Date of publication and mention of the grant of the patent: **25.04.2018**
(21) Application number: 15202368.5
(22) Date of filing: 23.12.2015
(51) Int. Cl.: C08K 5/103, C08L 91/02, C08L 75/08, C08L 75/06, C08G 18/76, C08K 5/00, C08G 18/10, C08G 18/42, C08L 67/08, C08L 91/00, C08L 75/04

(54) **COMPOSITIONS MADE FROM PLASTICIZED THERMOPLASTIC POLYURETHANES**
ZUSAMMENSETZUNGEN AUS WEICHMACHERHALTIGEN THERMOPLASTISCHEN POLYURETHANEN
COMPOSITIONS À BASE DE POLYURÉTHANES THERMOPLASTIQUES PLASTIFIÉS

(30) Priority: 23.12.2014 IT VI20140332
(43) Date of publication of application: 29.06.2016
(73) Proprietor: A.P.I. Applicazioni Plastiche Industriali S.P.A., 36065 Mussolente VI (IT)
(72) Inventor: BRUNETTI, Sergio, 36061 BASSANO DEL GRAPPA (VI) (IT)
(74) Representative: Münchow, Vera Ute Barbara

(56) References cited:
- EP-A1- 0 041 072
- EP-A2- 2 401 328
- WO-A2-2011/141408
- GB-A- 2 087 902
- US-A1- 2013 005 901
- Selim M. Erhan ET AL: "Factice from oil mixtures", JOURNAL OF THE AMERICAN OIL CHEMISTS' SOCIETY (JAOCS), vol. 70, no. 3, 1 March 1993 (1993-03-01), pages 309-311, XP055343881, DE ISSN: 0003-021X, DOI: 10.1007/BF02545313

## Description

### Technical field of the invention

The invention relates to a compound made from plasticized thermoplastic polyurethanes (TPU). The compound can be used in the manufacture of soles, midsoles and uppers for shoes, and also in the production of technical articles and in sports applications.

### Prior art

In footwear, for soles, midsoles, uppers both plasticized TPU and a TPU/TPS blend (TPS = styrenic block copolymer, in particular SEBS-SBS = styrene-ethylene/butylene-styrene (SEBS) - styrene-butadiene-styrene (SBS)) are used. The plasticized TPU has a glossy and transparent appearance, the TPU/TPS blend has an opaque and velvety appearance. For environmental reasons, materials from renewable sources are often used. Nowadays, thermoplastic polyurethanes are widely used in the production of technical articles, as well as in the manufacture of soles, midsoles and uppers for shoes, this also because they can be produced from renewable sources. The plasticized TPU often have a very high melt flow index determined according to the ASTM D1238 method (190°C/5 kg) that even exceeds values of 200 g/10 min. This high index creates problems during the molding process with phenomena of burrs and long molding cycle times.

GB 2 087 902 A and EP 0 041 072 A1 describe compounds containing rubber, factice and softener to obtain vibration and sound proof materials; EP 2 401 328 A2 and US 2013/005901 A1 disclose compounds comprising COPE or COPA, a softening agent and vulcanized vegetable oils to obtain TPEs made from biorenewable materials. The presence of factice or vulcanized vegetable oils is only described as having the effect of avoiding bleeding phenomena, no reference is made to the melt flow index or molding problems.

WO 2011/141408 A2 describes low hardness thermoplastic polyurethanes comprising plasticizers and their use in shoes. Selim M. Erhan and Robert Kleiman describe in "Factice from Oil Mixtures", Journal of the American Oil Chemists' Society (JAOCS), vol. 70, no. 3, 1 March 1993, pages 309-311 that vulcanized vegetable oils are useful to reduce mold fill time and cure cycle time and to promote flow under mechanical pressure in rubbers.

### Exposure of the invention

The object of the invention is to propose a compound made from plasticized thermoplastic polyurethane for use mainly in soles, midsoles and uppers for shoes, produced with materials from renewable sources, which has a low melt flow index value as defined above.

A further object of the invention is to provide a method for the production of such compounds.

The objects mentioned above, other objects and advantages that will be better highlighted hereinafter are achieved by a compound as defined by the first claim.

Preferably, the compound has a melt flow index (MFI) determined according to the ASTM D1238 method with 5 kg/190°C lower than 50 g/10 min, even more preferably lower than 25 g/10 min.

Adding EVA allows increasing the physical and mechanical properties, in particular the tensile strength.

The thermoplastic polyurethane can of course also be derived from fossil sources, but polyurethanes derived from renewable sources can be used in large scale, resulting in a saving of fossil sources and lower environmental impact, for example, a large reduction in the greenhouse gas emissions (an LCA (Life Cycle Assessment) internal study of the applicant has allowed determining a GWP (Global Warming Potential) of 3.2 CO₂ eq/kg for a standard plasticized TPU and 2.5 CO₂ eq/kg for the product according to the invention).The plasticizer allows the adjustment of the Shore hardness (determined according to the ASTM D2240 method). Adding a vulcanized vegetable oil to the compound has a major effect, namely the reduction of the melt flow index as defined above from values even greater than 200 g/10 min to values below 50 g/10 min, ensuring a short time molding without phenomena of burrs compared to a non-plasticized TPU added with VVO. The presence of the VVO does not significantly alter the hardness of the plasticized TPU.

Therefore, the invention also relates to the use of VVO to reduce the melt flow index, particularly in compounds made from plasticized TPU.

Moreover, a compound according to the invention imitates the opaque and velvety appearance of a TPU/TPS blend, improving some physical features such as MFI and tensile strength, and can thus replace the TPU/TPS blend which, due to its styrene content, is problematic from an environmental and health point of view.

Advantageously, the compound includes a lubricant. Lubricants favor the detachment step of the articles from the molds and limit the occurrence of frictions in the processing machines.

Advantageously, different types of fillers, such as calcium carbonates or silica, are used in the compound both as nucleating agents to favor a homogeneous dispersion of components, and to reduce the costs of the mixture.

If it is necessary to color the mixture, pigments are added to the compound. Moreover, the compound according to the invention may include antioxidants. Expanding agents are added to change the morphology of the compound or to obtain low-density materials.

Preferred types of additives were mentioned thus far, but also other types of additives are conceivable. The selection of these additives, their amounts used and the combination of different additives are within the skills of the man skilled in the art. The specific additives indicated hereinafter, however, proved especially favorable in obtaining a product with the desired features.

The thermoplastic polyurethane has a hardness of between 65 and 85 Shore A if it contains a plasticizer and between 65 Shore A and 45 Shore D without plasticizer, the compound itself has a hardness of between 55 and 90 Shore A, preferably between 65 and 85 Shore A. The plasticizer may also be derived from renewable sources as well as from fossil sources. Preferably, it does not contain phthalates. One of the ranges listed above includes limit values of Shore A and D since the Shore A hardness scale does not cover the entire desired range. The plasticizer helps regulating the toughness of the TPU, while adding the VVO does not affect the hardness set with the selection of the plasticized TPU: the VVO lowers the melt flow index without significantly affecting the hardness of the material.

In a preferred variant of the invention, the TPU in the compound consists of:
(a) polyester polyols obtained from a reaction between an acid selected from adipic acid, succinic acid, sebacic acid and mixtures thereof and a diol selected from propanediol, butanediol, monoethylen diol, methylpentyl diol, neopentyl glycol, hexanediol and mixtures thereof and/or polyether polyols selected from polytetramethylene glycols (PTMG), polypropylene glycols and polyether polyols obtained from a reaction of propylene-ethylene-oxide and mixtures thereof;
(b) aliphatic isocyanates, selected from hexamethylene diisocyanate (HDI) and isophorone diisocyanate (IPDI) and mixtures thereof, and/or the aromatic isocyanate methylene diphenyl diisocyanate (MDI);
(c) chain extenders, selected from propanediol, butanediol, monoethylen diol, methylpentyl diol, neopentyl glycol, hexanediol and mixtures thereof.

These components allow the production of a material with features suitable for use in soles, midsoles or uppers for shoes in which most of the material can be used from renewable sources.

The compound includes 40 to 85% by weight of TPU, 5 to 35% by weight of vulcanized vegetable oil and 5 to 30% by weight of plasticizer. The man skilled in the art easily determines the right amounts of plasticizer and VVO to adjust the desired Shore hardness and the desired melt flow index.

In the case of vulcanized vegetable oils, particularly suitable for the object of the invention are castor oil, canola oil or a mixture thereof. VVO made with these oils are less soft and clearer than VVO made with soybean oil. VVO made with castor oil are slightly clearer and more solid than VVO made with canola oil. A VVO made with castor oil is polar in nature and therefore has a good compatibility with polar polymers, such as TPU. In addition, it provides the best resistance to oil.

Advantageously, the plasticizer is a polar plasticizer. Polarity helps preventing the bleeding effect. Particularly preferred plasticizers are epoxidized soybean oil (ESO), acetic ester of monoglyceride (CAS 736150-63-3), glycerol tripropionate (GTP), isosorbide diesters and mixtures thereof. Their advantage results from the fact that on the one hand, they are available from renewable sources and on the other hand, they are polar. Plasticizers without phthalate are preferred.

The presence of vulcanized vegetable oil (WO), in addition to the influence on the melt flow index, has a beneficial side effect, namely, it helps limiting or preventing the bleeding phenomenon, and this is observed for all plasticizers used, in particular for the epoxidized soybean oil, acetic ester of monoglyceride, isosorbide diesters and glycerol tripropionate. In a mixture of Table 1 without the presence of WO, the vegetable plasticizer significantly exudes/migrates.

For the compound according to the invention, up to 80% of materials from renewable sources may be used.

A further aspect of the invention relates to a process for the production of a compound according to the process claim.

Various known processes can be conceived for mixing the single components of step (I), of which three are described in an exemplary and general manner in the part of the application describing the preferred embodiments of the invention. All three processes for obtaining a homogeneous mixture can be applied to the compound of the invention.

All the features indicated above for the compound according to the invention can, *mutatis mutandis,* be transferred to the process according to the invention.

In a variant of the invention, the compound according to the invention or the product obtained following the process according to the invention undergoes a molding process.

One last aspect of the invention relates to an article produced with the compound according to the invention or produced with the product obtained following the process according to the invention, wherein the article is a sole, a midsole or an upper for shoes. The compound according to the invention, due to its physical and low MFI features, is particularly suitable for being used in the production of shoes, and particularly in soles, midsoles and uppers for shoes, and also in the production of technical articles and sports applications. The objects and advantages mentioned will be better highlighted in the description of preferred embodiments of the invention given by way of a non-limiting example.

Variants of the invention are object of the dependent claims. The description of preferred embodiments of the compound, the process and the article according to the invention is given by way of a non-limiting example.

### Description of preferred embodiments

For the production of the compound according to the invention, the following descriptions of general production processes will serve as an example.

The mixture, referred to as compound, of the necessary components for obtaining, in the final processing cycle, an article having the desired mechanical properties is prepared.

Generally, the compositions of the compounds include the base polymers, the plasticizer, the VVO and optionally the additives.

A method of manufacturing the compound provides that these ingredients, suitably dosed, are mixed in suitable mixers until obtaining a homogeneous mixture, which is then introduced into extruders which melt and homogenize the components, allowing a mixture to be obtained in which all the components are finely dispersed in the base polymer(s).

A further manufacturing method differs from the previous one in that it does not provide, in the preliminary step, the preparation of the homogeneous mixture. In this case, an extruder is used which is provided with gravimetric metering devices which first provide the polymers to the extruder, which are melted, and subsequently the various other components, which are mixed in the mass of molten polymers, thus generating the homogeneous compound previously described.

Another method of manufacturing the compound, generally used in the manufacture of rubber, provides for preparing a hot premix in internal mixers (for example of the Banbury type); this compound is unloaded onto cylinder mixers so as to obtain a sheet of adequate thickness which, if desired, subsequently cut with a dicer allows obtaining a granule cubic in shape.

The end result in all the three cases described is obtaining a compound ready to be transformed by the end user with extrusion or molding processes.

In order to illustrate the advantages of the compound according to the invention, hereinafter is the description of a particularly preferred mixture with the following composition:

**Table 1**

| *Component* | *Quantity (*% *by weight)* |
|---|---|
| TPU (80 Shore A, ASTM D1238) | 60 |
| antioxidant agent | 0.1 |
| lubricant | 0.2 |
| VVO | 30 |
| bio-plasticizer | 9.7 |

TPU is an aromatic polyester polyurethane from a renewable source with a hardness of 80 Shore A (48% of the material is derived from renewable sources) wherein the isocyanate is diphenylmethane diisocyanate and the polyol is a monoethyleneglycol (MEG) sebacate, 1,4-butanediol and 2-methyl-2,4-pentanediol (MPD) with an average molecular weight of Mw = 2000 with a chain extender of 1,4-butanediol (BDO). VVO is derived from castor oil without mineral oil, sulfur and chloride and is derived by 90% from renewable sources. The bio-plasticizer is an isosorbide diester (100% from renewable sources). The lubricant is made from erucamide (e.g. CRODAMIDE E by Croda Chemicals Europe Ltd), while the antioxidant is Irganox 1010 (BASF), a high-molecular phenolic antioxidant. The compound has a total content of 66% of materials derived from renewable sources.

Other mixtures were produced that correspond to that indicated in Table 1, where only the plasticizer used changes, and ESO or acetic ester of monoglyceride were used.

The results of some experimental measures performed on the compound and on comparative compounds are shown below (Table 2) to help evaluating, using known parameters, some mechanical features of the product obtained compared with a TPU/TPS blend and a plasticized TPU without VVO:

**Table 2**

| **Method** | ASTM | ASTM | ASTM | ASTM | ASTM | | DIN | |
|---|---|---|---|---|---|---|---|---|
| | D792 | D2240 | D1238 | D624 | D638 | | 53516 | |
| **Property** | Density | Hardness | MFI (a): 2,16kg/ 230°C (b): 5 kg/ 190°C | Tearing strength Without notching | Tensile strength | Ultimate elongation | Abrasion resistance | Content based on renewable sources |
| **Unit** | g/cm³ | Shore A | g/10 min | kN/m | MPa | % | mm³ | % |
| **Materials** | | | | | | | | |
| **Standard TPU/TPS** | 1,03 | 60 | 23 (a) | 35 | 11 | 600 | 60 | 0 |
| **TPU/plasticizer without VVO** | 1.16 | 60 | > 200 (b) | 51 | 23 | 850 | 56 | 0 |
| **TPU/VVO/plasticizer as above** | 1.07 | 60 | 19 (b) | 46 | 11 | 560 | 70 | 66% |
| **TPU/VVO/ESO** | 1.07 | 60 | 15 | 39 | 9 | 480 | 49 | 66 |
| **TPU/VVO/ acetic ester of monoglyceride** | 1.07 | 60 | 26 | 41 | 10 | 530 | 74 | 66 |

It is important to note how the addition of the VVO in the plasticized thermoplastic polyurethane allowed obtaining a compound with a low melt flow index value and higher performance as regards the mechanical strength (tearing strength) compared to the standard TPU/TPS. Compared to a standard plasticized TPU without VVO obtained from MDI such as isocyanate, butanediol adipate with a Mw of 2000 and the chain extender BDO with a plasticizer of dipropyleneglycol benzoate, it was possible to considerably lower the MFI.

In the execution step, further changes or embodiments variants not described may be made to the compound, the process and the article object of the invention. Where such changes or such variants should fall within the scope of the following claims, they shall be understood as all protected by the present patent.

## Claims

1. A compound comprising
(a) from 40 to 85% by weight of a polyether or polyester thermoplastic polyurethane (TPU);
(b) from 5 to 35% by weight of_a vulcanized vegetable oil;
(c) from 5 to 30% by weight of a plasticizer; and
(d) optionally, one or more further additives selected from lubricants, antioxidants, fillers, pigments, expanding agents and further polymers, in particular ethylene vinyl acetate (EVA),
wherein the compound has a melt flow index (MFI) determined according to the ASTM D1238 method with 5 kg/190°C lower than 60 g/10 min, and wherein the thermoplastic polyurethane has a hardness of between 65 and 85 Shore A if it contains a plasticizer and between 65 Shore A and 45 Shore D without plasticizer and the compound itself has a hardness of between 55 Shore A and 90 Shore A, wherein the hardness is determined according to the ASTM D2240 method.

2. Compound according to claim 1 **characterized in that** the compound has a melt flow index (MFI) determined according to the ASTM D1238 method with 5 kg/190°C lower than 50 g/10 min.

3. Compound according to one of claims 1 or 2, **characterized in that** the TPU consists of
(a) polyester polyols obtained from a reaction between an acid selected from adipic acid, succinic acid, sebacic acid and mixtures thereof and a diol selected from propanediol, butanediol, monoethylen diol, methylpentyl diol, neopentyl glycol, hexanediol and mixtures thereof and/or polyether polyols selected from polytetramethylene glycols (PTMG), polypropylene glycols and polyether polyols obtained from a reaction of propylene-ethylene-oxide and mixtures thereof;
(b) aliphatic isocyanates, selected from hexamethylene diisocyanate (HDI) and isophorone diisocyanate (IPDI) and mixtures thereof, and/or the aromatic isocyanate methylene diphenyl diisocyanate (MDI);
(c) chain extenders selected from propanediol, butanediol, monoethylen diol, methylpentyl diol, neopentyl glycol, hexanediol and mixtures thereof.

4. Compound according to anyone of the preceding claims **characterized in that** the compound has a melt flow index (MFI) determined according to the ASTM D1238 method with 5 kg/190°C lower than 25 g/10 min.

5. Compound according to any one of the preceding claims, **characterized in that** the vegetable oil is castor oil, canola oil or a mixture thereof.

6. Compound according to any one of the preceding claims, **characterized in that** the plasticizer is a polar plasticizer, selected from epoxidized soybean oil (ESO), acetic ester of monoglyceride, glycerol tripropionate, isosorbide diesters and mixtures thereof.

7. Compound according to any one of the preceding claims **characterized in that** it further comprises ethylene vinyl acetate.

8. Compound according to any one of the preceding claims, **characterized in that** the plasticizer is a polar plasticizer derived from renewable sources.

9. A process for the production of a compound according to any one of the preceding claims, comprising the following steps:
(I) mixing at least:
(a) a polyether or polyester thermoplastic polyurethane (TPU);
(b) a vulcanized vegetable oil;
(c) a plasticizer; and
(d) optionally, one or more further additives selected from lubricants, antioxidants, fillers, pigments, expanding agents and further polymers, in particular ethylene vinyl acetate (EVA)
obtaining a compound that has a melt flow index (MFI) determined according to the ASTM D1238 method with 5 kg/190°C lower than 60 g/10 min. that comprises from 40 to 85% by weight of TPU, from 5 to 35% by weight of the vulcanized vegetable oil and from 5 to 30% by weight of the plasticizer, and wherein the thermoplastic polyurethane has a hardness of between 65 and 85 Shore A if it contains a plasticizer and between 65 Shore A and 45 Shore D without plasticizer and the compound itself has a hardness of between 55 Shore A and 90 Shore A, wherein the hardness is determined according to the ASTM D2240 method.

10. An article produced with the compound according to any one of claims 1 to 8 or produced by means of the product obtained according to the process of claim 9, **wherein** the article is a sole, a midsole or an upper for shoes.

## Patentansprüche

1. Eine Zusammensetzung enthaltend
(a) von 40 bis 85 Gewichts-% eines thermoplastischen Polyether- oder Polyesterpolyurethans (TPU);
(b) von 5 bis 35 Gewichts-% eines vulkanisierten Pflanzenöls;
(c) von 5 bis 30 Gewichts-% eines Weichmachers; und
(d) wahlweise einen oder mehrere weitere Zusatzstoffe ausgewählt aus Schmiermitteln, Antioxidationsmitteln, Füllstoffen, Pigmenten, Treibmitteln und weiteren Polymeren, insbesondere Ethylenvinylacetat (EVA),
worin die Zusammensetzung einen gemäß der ASTM-Methode D1238 mit 5 kg/190°C bestimmten Schmelzflussindex (MFI) aufweist, der geringer ist als 60 g/10 min, und
worin das thermoplastische Polyurethan eine Härte zwischen 65 und 85 Shore A aufweist, wenn es einen Weichmacher enthält, und ohne Weichmacher eine Härte zwischen 65 Shore A und 45 Shore D aufweist und die Zusammensetzung selbst eine Härte zwischen 55 Shore A und 90 Shore A aufweist, wobei die Härte gemäß ASTM D2240-Methode bestimmt wird.

2. Zusammensetzung nach Anspruch 1, **dadurch gekennzeichnet, dass** die Zusammensetzung einen gemäß der ASTM-Methode D1238 mit 5 kg/190°C bestimmten Schmelzflussindex (MFI) aufweist, der geringer ist als 50 g/10 min.

3. Zusammensetzung nach einem der Ansprüche 1 oder 2, **dadurch gekennzeichnet, dass** das TPU aus
(a) Polyesterpolyolen erhalten aus einer Reaktion zwischen eine Säure ausgewählt aus Adipinsäure, Bernsteinsäure, Sebacinsäure und Mischungen davon und einem Diol ausgewählt aus Propandiol, Butandiol, Monoethylendiol, Methylpentyldiol, Neopentylglykol, Hexandiol und Mischungen davon und/oder Polyetherpolyolen ausgewählt aus Polytetramethylenglykolen (PTMG), Polypropylenglykolen und Polyetherpolyolen erhalten aus einer Reaktion von Propylenethylenoxid und Mischungen davon;
(b) aliphatischen Isocyanaten, ausgewählt aus Hexamethylendiisocyanat (HDI) und Isophorondiisocyanat (IPDI) und Mischungen davon, und/oder dem aromatischen Isocyanat Methylendiphenyldiisocyanat (MDI);
(c) Kettenverlängerern ausgewählt aus Propandiol, Butandiol, Monoethylendiol, Methylpentyldiol, Neopentylglykol, Hexandiol und Mischungen davon
besteht.

4. Zusammensetzung nach einem der vorstehenden Ansprüche **dadurch gekennzeichnet, dass** die Zusammensetzung einen gemäß der ASTM-Methode D1238 mit 5 kg/190°C bestimmten Schmelzflussindex (MFI) aufweist, der geringer ist als 25 g/10 min.

5. Zusammensetzung nach einem der vorstehenden Ansprüche **dadurch gekennzeichnet, dass** das vulkanisierte Pflanzenöl Rizinusöl, Rapsöl oder eine Mischung davon ist.

6. Zusammensetzung nach einem der vorstehenden Ansprüche **dadurch gekennzeichnet, dass** der Weichmacher ein polarer Weichmacher ist, ausgewählt aus epoxidiertem Sojaöl (ESO), Monoglyceridessigester, Glyceroltripropionat, Isosorbiddiestern und Mischungen davon.

7. Zusammensetzung nach einem der vorstehenden Ansprüche **dadurch gekennzeichnet, dass** sie außerdem Ethylenvinylacetat umfasst.

8. Zusammensetzung nach einem der vorstehenden Ansprüche **dadurch gekennzeichnet, dass** der Weichmacher ein aus nachwachsenden Rohstoffen stammender polarer Weichmacher ist.

9. Ein Verfahren zur Herstellung einer Zusammensetzung nach einem der vorstehenden Ansprüche, umfassend die folgenden Schritte:
(I) Vermischen von wenigstens:
(a) einem thermoplastischen Polyether- oder Polyesterpolyurethan (TPU);
(b) einem vulkanisierten Pflanzenöl;
(c) einem Weichmacher; und
(d) wahlweise einem oder mehreren weiteren Zusatzstoffen, ausgewählt aus Schmiermitteln, Antioxidationsmitteln, Füllstoffen, Pigmenten, Treibmitteln und weiteren Polymeren, insbesondere Ethylenvinylacetat (EVA),
wobei eine Zusammensetzung erhalten wird, die einen gemäß der ASTM-Methode D1238 mit 5 kg/190°C bestimmten Schmelzflussindex (MFI) aufweist, der geringer ist als 60 g/10 min, und die 40 bis 85 Gewichts-% TPU, 5 bis 35 Gewichts-% des vulkanisierten Pflanzenöls und 5 bis 30 Gewichts-% des Weichmachers enthält, worin das thermoplastische Polyurethan eine Härte zwischen 65 und 85 Shore A aufweist, wenn es einen Weichmacher enthält, und ohne Weichmacher eine Härte zwischen 65 Shore A und 45 Shore D aufweist und die Zusammensetzung selbst eine Härte zwischen 55 Shore A und 90 Shore A aufweist, wobei die Härte gemäß ASTM D2240-Methode bestimmt wird.

10. Ein Artikel hergestellt mit der Zusammensetzung nach einem der Ansprüche 1 bis 8 oder hergestellt mittels des nach dem Verfahren nach Anspruch 9 erhaltenen Produkts, worin der Artikel eine Sohle, eine Zwischensohle oder ein Oberschuh für Schuhe ist.

## Revendications

1. Composition comprenant
(a) de 40 à 85% en poids d'un polyéther ou polyester polyuréthane thermoplastique (TPU) ;
(b) de 5 à 35% en poids d'une huile végétale vulcanisée ;
(c) de 5 à 30% en poids d'un plastifiant ; et
(d) facultativement, un ou plusieurs autres additifs choisis parmi les lubrifiants, les antioxydants, les charges, les pigments, les agents d'expansion et d'autres polymères, en particulier l'éthylène-acétate de vinyle (EVA),
où la composition a un indice de fluidité à chaud (IFC) déterminé selon la méthode ASTM D1238 avec 5 kg/190°C inférieur à 60 g/10 min, et dans lequel le polyuréthane thermoplastique a une dureté comprise entre 65 et 85 Shore A s'il contient un plastifiant et entre 65 Shore A et 45 Shore D sans plastifiant et la composition elle-même a une dureté comprise entre 55 Shore A et 90 Shore A, où la dureté est déterminée selon la méthode ASTM D2240.

2. Composition selon la revendication 1, **caractérisée en ce que** la composition a un indice de fluidité à chaud (IFC) déterminé selon la méthode ASTM D1238 avec 5 kg/190°C inférieur à 50 g/10 min.

3. Composition selon l'une des revendications 1 ou 2, **caractérisée en ce que**
le TPU est composé de
(a) polyesters polyols obtenus à partir d'une réaction d'un acide choisi parmi l'acide adipique, l'acide succinique, l'acide sébacique et leurs mélanges et un diol choisi parmi le propanediol, le butanediol, le monoéthylène diol, le méthylpentyl diol, le néopentyl glycol, l'hexanediol et leurs mélanges et/ou les polyéther polyols choisis parmi les polytetraméthylène glycols (PTMG), les polypropylène glycols et les polyéther polyols obtenus à partir d'une réaction de propylène-éthylène-oxyde et leurs mélanges ;
(b) isocyanates aliphatiques, choisis parmi l'hexaméthylène diisocyanate (HDI) et l'isophorone diisocyanate (IPDI) et leurs mélanges, et/ou l'isocyanate aromatique méthylène diphényl diisocyanate (MDI) ;
(c) extenseur de chaîne choisis parmi le propanediol, le butanediol, le monoéthylènediol, le méthylpentyl diol, le néopentyl glycol, l'hexanediol et leurs mélanges.

4. Composition selon l'une quelconque des revendications précédentes, **caractérisée en ce que** la composition a un indice de fluidité à chaud (IFC) déterminé selon la méthode ASTM D1238 avec 5 kg/190°C inférieur à 25 g/10 min.

5. Composition selon l'une quelconque des revendications précédentes, **caractérisée en ce que** l'huile végétale est l'huile de ricin, huile de canola ou un leur mélange.

6. Composition selon l'une quelconque des revendications précédentes, **caractérisée en ce que** le plastifiant est un plastifiant polaire, choisi parmi l'huile de soja époxydée (ESO), l'ester acétique de monoglycéride, le tripropionate de glycérol, les diesters d'isosorbide et leurs mélanges.

7. Composition selon l'une quelconque des revendications précédentes, **caractérisée en ce qu'**elle comprend en outre de l'éthylène-acétate de vinyle.

8. Composition selon l'une quelconque des revendications précédentes, **caractérisée en ce que** le plastifiant est un plastifiant polaire issu de sources renouvelables.

9. Procédé de fabrication d'une composition selon l'une quelconque des revendications précédentes, comprenant les étapes suivantes:
(I) mélanger au moins :
(a) un polyéther ou un polyester polyuréthane thermoplastique (TPU) ;
(b) une huile végétale vulcanisée ;
(c) un plastifiant ; et
(d) facultativement, un ou plusieurs autres additifs choisis parmi les lubrifiants, les antioxydants, les charges, les pigments, les agents d'expansion et d'autres polymères, en particulier l'éthylène-acétate de vinyle (EVA)
obtenant une composition qui a un indice de fluidité à chaud (IFC) déterminé selon la méthode ASTM D1238 avec 5 kg/190°C inférieur à 60 g/10 min qui comprend de 40 à 85% en poids de TPU, de 5 à 35% en poids de huile végétale vulcanisée et de 5 à 30% en poids de plastifiant et où le polyuréthane thermoplastique a une dureté comprise entre 65 et 85 Shore A s'il contient un plastifiant et entre 65 Shore A et 45 Shore D sans plastifiant et la composition elle-même a une dureté comprise entre 55 Shore A et 90 Shore A, où la dureté est déterminée selon la méthode ASTM D2240.

10. Article fabriqué avec la composition selon l'une quelconque des revendications de 1 à 8 ou produit au moyen du produit obtenu selon le procédé de la revendication 9, où l'article est une semelle, une semelle intercalaire ou une empeigne pour chaussures.
